# EUROPÄISCHE PATENTSCHRIFT

(11) **EP 2 062 758 B1**
(45) Veröffentlichungstag und Bekanntmachung des Hinweises auf die Patenterteilung: **29.06.2016**
(21) Anmeldenummer: 08169090.1
(22) Anmeldetag: 14.11.2008
(51) Int. Cl.: B60G 17/015, B60G 17/0165, B60G 17/04, B60G 17/052, B60N 2/50, B60N 2/52, B62D 33/06, B62D 33/10, F16F 9/05, F16F 15/027

(54) **Vorrichtung mit einem Federungssystem sowie Verfahren zur Einstellung eines Federungssystems**
Device with a suspension system and method for setting a suspension system
Dispositif doté d'un système de ressort et procédé de réglage d'un système de ressort

(30) Priorität: 24.11.2007 DE 102007056700
(43) Veröffentlichungstag der Anmeldung: 27.05.2009
(73) Patentinhaber: GRAMMER AG, 92224 Amberg (DE)
(72) Erfinder: Erwin, Haller, 92262, Birgland (DE); Jens Kolb, 92281 Königsstein (DE)
(74) Vertreter: Hannke, Christian

(56) Entgegenhaltungen:
- EP-A- 0 304 618
- DE-A1- 2 604 809
- DE-A1- 3 524 863
- DE-B3-102004 054 325
- DE-T2- 60 121 688
- DE-U1- 20 214 583

## Beschreibung

Die Erfindung betrifft eine Vorrichtung mit einem Federungssystem, sowie ein Verfahren zur Einstellung eines derartigen Federungssystems.

Das erwähnte Federungssystem weist ein mit einer Masse beaufschlagtes erstes Teil, ein zweites Teil sowie eine zwischen diesem ersten Teil und diesem Teil angeordnete bzw. wirkende Luftfeder auf.

Derartige Federungssysteme kommen bei unterschiedlichsten technischen Gestaltungen zum Einsatz. Ein Beispiel für eine technische Gestaltung mit einem solchen Federungssystem bildet die Radaufhängung von diversen Fahrzeugen, wie beispielsweise Kraftfahrzeugen. Ein weiteres Beispiel für ein derartiges Federungssystem bilden gefederte Fahrzeugsitze für Nutzfahrzeuge, Lastkraftwagen und dergleichen. Derartige Fahrzeugsitze sind typischerweise auf dem Boden des Kraftfahrzeuges gelagert, wobei dieser Boden bzw. das Kraftfahrzeug als zweites bzw. fest angeordnetes Teil angesehen werden kann. Die Sitzfläche des Fahrzeugsitzes kann dabei als erstes Teil angesehen werden, das mit einer Masse, nämlich Fahrermasse, beaufschlagbar ist. Bei derartigen Sitzen ist häufig zwischen dem ersten Teil bzw. der Sitzfläche und dem zweiten Teil bzw. dem Fahrzeugboden bzw. der Fahrzeugmasse eine Luftfeder und ggf. ein Scherengestell vorgesehen. Die Luftfeder ist dabei wirkungsmäßig zwischen dem ersten Teil und dem zweiten Teil verschaltet. Ggf. können dabei zusätzlich noch Dämpfer vorgesehen sein.

Ein Beispiel für eine Gestaltung der zuletzt genannten Art ist aus der DE 10 2004 054325 B3 bekannt. Bei der dort vorgeschlagenen Gestaltung soll der Federungskomfort verbessert werden, wozu vorgeschlagen wird, dass die Höhe der Sitzfläche gegenüber dem Fahrzeugboden erfasst wird und die Beschleunigung der Sitzfläche in vertikaler Richtung erfasst wird. Anhand der entsprechenden Messdaten wird anschließend der Druck in der Luftfeder variiert. Mit anderen Worten wird in der DE 10 2004 054325 B3 vorgeschlagen, in Abhängigkeit der Vertikalbeschleunigung sowie der Höhe der Fahrersitzfläche über dem Fahrzeugboden die Menge der in der Luftfeder gegebenen Luft zu variieren.

Aus der DD 220674 A1 ist ein aktiver, elektrohydraulischer Schwingungsdämpfer bekannt, der parallel geschaltet zu einer Feder dämpfend auf einen Fahrzeugsitz wirken soll.

Aus der DD 223835 A1 ist ein Regler für ein hybrides Schwingungsschutzsystem mit Rückkopplung der Absolutgeschwindigkeit des Objektes bekannt, das sich für Sitze einsetzen lässt und bei dem die Beschleunigung Berücksichtigung findet.

Aus der DE 601 21688 T2 ist ein aktives Sitzfederungssystem für einen Sitz bekannt, der durch ein Scherengestänge über einem Sitzunterbau getragen wird. Zwischen dem Sitz und dem Unterbau sind dabei ein Hydraulikkolben und ein Luftkissen vorgesehen. Die Luftmenge in dem volumenkonstanten Luftkissen wird durch einen Kompressor und durch eine Lüftung gesteuert. Die Gestaltung weist einen Beschleunigungsaufnehmer sowie einen Sitzpositionssensor auf, deren Messwerte von einer elektronischen Steuereinheit (ECU) bei der Ansteuerung des Kompressors und der Entlüftung berücksichtigt werden.

Aus der DE 202 14 583 U1 ist ein aktives Luftfederungssystem für eine Radaufhängung bekannt, der mittels ein variables Zusatzvolumen den Konfort der Luftfederung erhöht.

Der Erfindung liegt nun die Aufgabe zugrunde, eine Vorrichtung mit einem Federsystem sowie ein Verfahren zum Einstellen eines derartigen Federsystems zu schaffen, welche bzw. welches eine gute Anpassung an sich verändernde Rahmenbedingungen ermöglicht.

Erfindungsgemäß wird insbesondere eine Vorrichtung mit einem Sitzfederungssystem gemäß Anspruch 1 vorgeschlagen. Ein erfindungsgemäßes Verfahren zur Einstellung eines Federungssystem ist Gegenstand des Anspruchs 9. Bevorzugte Weiterbildungen sind Gegenstand der Unteransprüche.

Es wird also insbesondere eine Vorrichtung mit einem Federungssystem vorgeschlagen, wobei das genannte Federungssystem ein mit einer Masse beaufschlagtes erstes Teil, ein zweites Teil, sowie eine zwischen diesem ersten Teil und diesem Teil angeordnete Luftfeder aufweist. Das erste Teil ist dabei die Sitzfläche eines Fahrzeugsitzes, wie beispielsweise die Sitzfläche eines Nutzfahrzeug-Sitzes oder Lkw-Sitzes oder dergleichen. Die Masse, welche dieses erste Teil beaufschlagt, kann dabei insbesondere die Masse einer auf der Sitzfläche des Sitzes sitzenden Person sein. Das zweite Teil ist der Boden eines Fahrzeuges, wie Lkw oder Nutzkraftfahrzeug, oder ein anderes mit dem Boden fest verbundenes Teil. Bei einer solchen Gestaltung ist die erfindungsgemäße Vorrichtung vorzugsweise der Fahrzeugsitz eines Fahrzeuges, wie Nutzkraftfahrzeug oder Lkw, oder ein solches Fahrzeug selbst.

Die erfindungsgemäße Vorrichtung weist zusätzlich zu der Luftfeder eine Zusatz-Volumeneinrichtung für Luft auf, deren Volumen gesteuert veränderbar ist. Ferner weist diese Vorrichtung eine erste Steuerungseinrichtung für die Einstellung des Volumens der Zusatz-Volumeneinrichtung auf.

Es ist vorgesehen, dass die Zusatz-Volumeneinrichtung mit der Luftfeder in Fluid-Verbindung steht. Zu diesem Zweck kann beispielsweise vorgesehen sein, dass eine Druckleitung zwischen der Zusatz-Volumeneinrichtung und der Luftfeder vorgesehen ist. Dabei ist insbesondere vorgesehen, dass über diese Fluid-Verbindung ein Druckausgleich zwischen dem Druck in der Luftfeder und dem Druck in der Zusatz-Volumeneinrichtung ermöglicht wird. Es kann auch vorgesehen sein, dass die Fluid-Verbindung zwischen der Zusatz-Volumeneinrichtung und der Luftfeder unterbrechbar ist. Zu diesem Zweck kann ein entsprechendes Ventil vorgesehen sein, welches in einer geöffneter und einer geschlossenen Stellung verstellbar ist. Vorzugsweise ist zwischen der Luftfeder und der Zusatz-Volumeneinrichtung eine Fluidverbindungs-Einrichtung vorgesehen, die eine Dünnstelle bildet, wie z.B. Schlauch oder Rohrleitung bzw. Leitung.

In einer besonders vorteilhaften Ausgestaltung ist vorgesehen, dass das erste Teil und das zweite Teil zusätzlich über eine Führungseinrichtung gekoppelt sind. Beispielsweise kann eine derartige Führungseinrichtung als Scherengestell ausgebildet sein, was sich insbesondere für die Ausgestaltung der Vorrichtung als Fahrzeugsitz bzw. als Fahrzeug mit Fahrzeugsitz anbietet.

Es kann auch vorgesehen sein, dass zwischen dem ersten Teil und dem zweiten Teil zusätzlich zu der Luftfeder ein Dämpfer vorgesehen ist. Die erfindungsgemäße Vorrichtung kann in alternativer Ausgestaltung auch so sein, dass ein derartiger Dämpfer entbehrlich ist und die Dämpfungswirkung insbesondere über die Steuerung des Volumens der Zusatz-Volumeneinrichtung bewirkt wird.

In einer besonders vorteilhaften Ausgestaltung ist die Zusatz-Volumeneinrichtung fluidmäßig mit der Luftfeder in Reihe geschaltet.

In einer besonders vorteilhaften und zweckmäßigen Ausgestaltung ist die Zusatz-Volumeneinrichtung derart ausgestaltet, dass sie zur Nachrüstung in Fahrzeugen verwendet werden kann.

Es ist insbesondere vorgesehen, dass die Luftfeder mit der Zusatzvolumeneinrichtung und der dazwischen angeordneten Fluid-Verbindung ein geschlossenes System bildet.

Zusätzlich kann vorgesehen sein, dass das System zu einem offenen System erweiterbar ist bzw. über Zusatzfunktionalitäten zu einem offenen System wird. Dies kann beispielsweise so sein, dass die Vorrichtung - in der Ausgestaltung als Fahrzeugsitz bzw. Fahrzeug mit-Fahrzeugsitz - eine Funktionalität bietet, die so ist, dass das im System befindliche Volumen einstellbar ist, was beispielsweise zur Sitzhöhenverstellung verwendet werden kann. Zu diesem Zweck kann beispielsweise vorgesehen sein, dass mittels einer Pumpe oder dergleichen die in der Luftfeder und/öder dem Zusatzvolumen befindliche Luftmenge erhöht werden kann oder auch über entsprechende Ablasseinrichtungen vermindert werden kann.

Es ist vorzugsweise insbesondere vorgesehen, dass die Veränderung des Volumens der Zusatzfedereinrichtung im geschlossenen Zustand des Systems erfolgt.

Insbesondere ist also vorgesehen, dass sich die Federrate der Feder einstellen lässt und zwar in einem geschlossenen System bzw. durch Volumenveränderung der Zusatzfedereinrichtung.

Ferner wird insbesondere ein Verfahren gemäß Anspruch 9 vorgeschlagen. Gemäß diesem Verfahren zur Einstellung eines Federungssystems ist eine Vorrichtung vorgesehen, die zunächst wenigstens ein Betriebskennwert der Vorrichtung und des Federungssystems ermittelt. Dieses Ermitteln kann beispielsweise ein Erfassen oder ein Messen sein. Zu diesem Zweck kann eine Erfassungs- bzw. Messeinrichtung vorgesehen sein. Es kann aber auch vorgesehen sein, dass der bzw. die Betriebskennwerte rechnerisch ermittelt werden. Anschließend wird dann das Volumen der Zusatz-Volumeneinrichtung in Abhängigkeit des wenigstens einen ermittelten Betriebskennwerts eingestellt. Dies kann in einer vorteilhaften Ausgestaltung so sein, dass als Betriebskennwerte die Beschleunigung des ersten Teils gegenüber dem zweiten Teil sowie die Relativposition des ersten Teils gegenüber dem zweiten Teil, verwendet werden. Bei die Ausgestaltung als Fahrzeugsitz entspricht beispielsweise die Relativposition der Sitzhöhe im Fahrzeug, sofern es sich hierbei um die vertikale Relativposition handelt, was vorzugsweise der Fall ist. In entsprechender Weise wird vorzugsweise die Beschleunigung die Vertikalbeschleunigung des ersten Teils gegenüber dem zweiten Teil sein. In dieser bevorzugten Ausgestaltung wird in Abhängigkeit dieser Beschleunigung und dieser Relativposition das Sollvolumen der Zusatz-Volumenvorrichtung ermittelt und mittels einer Steuerungsvorrichtung, das Sollvolumen angesteuert. In die erfindungsgemäßen Ausgestaltung - insbesondere dies bezieht sich sowohl auf das Verfahren als auch auf die Vorrichtung - wird das Volumen der Zusatz-Volumenvorrichtung mittels einer Regelungseinrichtung geregelt.

Im Folgenden sollen nun diverse Ausführungsbeispiele der Erfindung näher erläutert werden, ohne dass die Erfindung nur auf diese beschränkt sein soll. Dabei zeigt:
- Fig. 1, 2a, 2b und 2c: eine erste beispielhafte Ausführungsform einer erfindungsgemäßen Vorrichtung;
- Fig. 3: eine zweite beispielhafte Ausführungsform einer erfindungsgemäßen Vorrichtung, wobei diese Vorrichtung insbesondere entsprechend der schematischen Gestaltung gemäß den Figuren 1 bis 2c ausgestaltet sein kann;
- Fig. 4 und 5: beispielhafte Kraft-Hub-Verläufe, die beispielsweise bei den Gestaltungen gemäß den Figuren 1 bis 2c bzw. 3 gegeben sein können; und

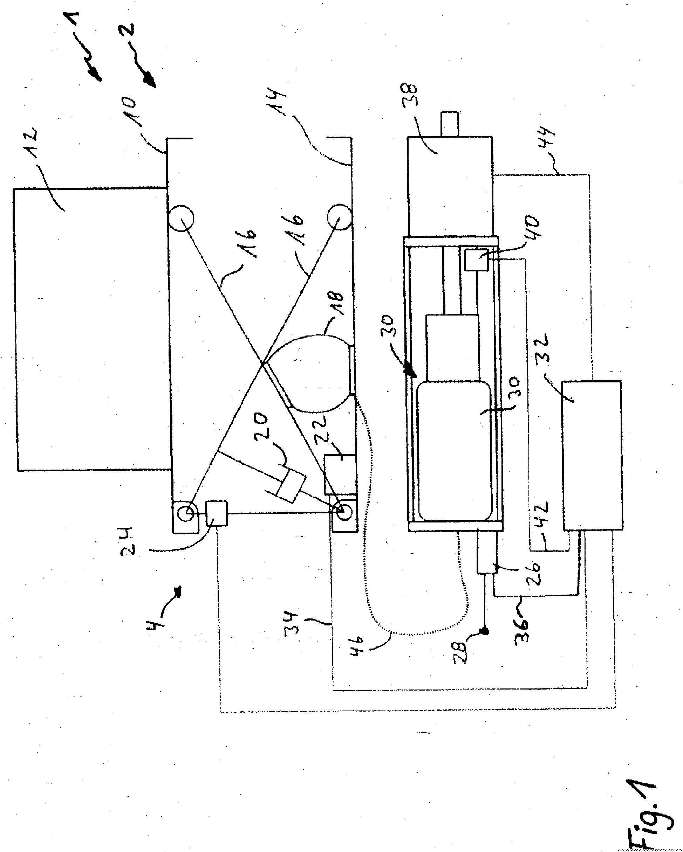

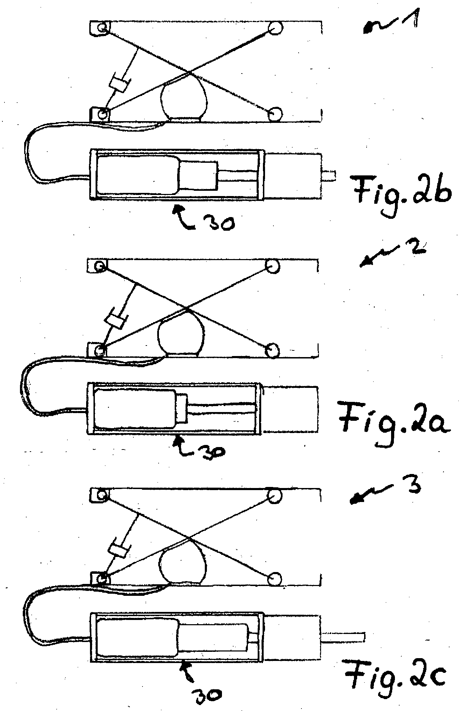

Die Figuren 1, 2a, 2b und 2c zeigen eine beispielhafte Ausführungsform einer erfindungsgemäßen Vorrichtung in schematischer Ansicht am Beispiel eines Fahrersitzes. Diese Vorrichtung kann zur Durchführung eines Verfahrens zur aktiven Reduzierung der Schwingungs-Exposition und Niveausteuerung in luftgefederten Fahrersitzen verwendet werden und zwar beispielsweise für vertikale Schwingungseinleitungen.

Im Zusammenhang mit der Gestaltung gemäß den Figuren 1 bis 2c soll auch auf ein beispielhaftes erfindungsgemäßes Verfahren eingegangen werden.

Die Figuren 1 bis 2c zeigen - in schematischer Ansicht - eine beispielhafte erfindungsgemäße Vorrichtung 1, die als Fahrersitz 2 ausgestaltet ist. Der Sitz weist eine Sitzfläche 10 auf, die ein mit einer Masse 12 beaufschlagtes bzw. beaufschlagbares erstes Teil bildet. Die Masse 12 ist hierbei beispielhaft in Form einer Person bzw. eines Fahrers, die den Sitz belastet, ausgestaltet. Die Person 12 bzw. Masse 12 kann auch als gefederte Masse bezeichnet werden.

Ferner ist eine ungefederte Masse vorgesehen, die beispielsweise von dem Federungsunterteil oder dem Kabinenboden gebildet wird. Diese ungefederte Masse ist insbesondere ein zweites Teil 14, wobei dieses zweite Teil 14 beispielsweise auch einen Fuß des Sitzes oder dergleichen bilden kann, der mit dem Fahrzeugboden fest verbunden ist.

Zwischen dem ersten Teil 10 und dem zweiten Teil 14 ist ein Führungssystem, das hier als Scherensystem bzw. Scherenlenkersystem ausgebildet ist und das erste Teil 10 mit dem zweiten Teil 14 koppelt bzw. eine gefederte Masse 12 mit einer ungefederten Masse 14 (bzw. mit 14 verbunden) verbindet. Die Vorrichtung 1 weist ferner eine zwischen dem ersten Teil 10 und dem zweiten Teil 14 angeordnete bzw. wirkende Luftfeder 18 auf, sowie eine zwischen dem ersten Teil 10 und dem zweiten Teil 14 angeordnete bzw. wirkende Dämpfereinrichtung 20 auf. Anzumerken ist, dass - soweit hier von Luftfeder 18 gesprochen wird - diese Luftfeder eine Gasfeder ist, wobei vorzugsweise Luft als Gas eingesetzt wird. Die Masseabstützung zwischen der ungefederten Masse 14 und der gefederten Masse 12 erfolgt über eine Luftfeder 18. Der Dämpfer 20 kann hydraulisch und/oder semiaktiv und/oder aktiv geregelt ausgeführt sein.

Bei aktiver Volumenregelung kann ein Dämpfer auch komplett entfallen, was sich aber bei einem etwaigen Ausfall der aktiven Volumenregelung als nachteilig auswirken könnte (Notlaufsituation bei Stromausfall).

Die Vorrichtung 1 bzw. das von dieser umfasste Federungssystem 4 weist ferner einen Beschleunigungsaufnehmer 22 auf. Dieser Beschleunigungsaufnehmer 22 kann beispielsweise im ungefederten Bereich zur Erfassung von vom Kabinenboden eingeleiteten Schwingungen angeordnet sein. Es kann vorgesehen sein, dass der Beschleunigungsaufnehmer 22 Beschleunigungen in vertikaler Richtung aufnimmt. Es kann aber auch vorgesehen sein, dass der Beschleunigungsaufnehmer 22 zusätzlich oder alternativ in anderen Dimensionen Beschleunigungen aufnimmt.

Weiter ist ein Lagesensor bzw. Positionserfassungssensor 24 vorgesehen. Der Lagesensor 24 ist zwischen gefederter 12 und ungefederter Masse bzw. zwischen dem ersten Teil 10 bzw. dem zweiten Teil 14 angeordnet. Der Lagesensor 24 dient der Erfassung der relativen Sitzhöhe, welche über den Benutzer bzw. Fahrer veränderbar ist. Die relative Sitzhöhe kann durch Zu- oder Abfuhr der im geschlossenen Luftsystem befindlichen Luftmenge über ein Zu-/Abluftventil bzw. Steuerventil "Zu-/Abluft", welches mit einem druckförderndem System 28, wie beispielsweise Bordnetz, Kompressor oder dergleichen, verbunden ist, geregelt werden.

Die Vorrichtung 1 bzw. das Federungssystem 4 weist ferner ein in seiner Größe veränderbares Zusatzvolumen bzw. eine Zusatz-Volumeneinrichtung 30, deren Volumen hinsichtlich ihrer Größe veränderbar ist, auf. Diese Zusatz-Volumeneinrichtung kann beispielsweise als ein im Durchmesser formstabile Luftfeder-Rollbalg ausgebildet sein. Mittels dieser Zusatz-Volumeneinrichtung 30 bzw. dem Volumen dieser Zusatz-Volumeneinrichtung 30, das einstellbar ist, kann ein bestimmter Bereich die Federsteifigkeit bzw. Federrate der Luftfeder 18 bzw. des Federungssystems 4 den jeweiligen Bedürfnissen des Fahrers bzw. der Fahrbahnunebenheit oder bestimmten Betriebsparametern angepasst werden.

Die Dämpfereinrichtung 20 bzw. der Stoßdämpfer 20 ist insbesondere ein hydraulischer Stoßdämpfer. Der Lagesensor 24 ist insbesondere ein Sensor für die Höhe bzw. das Niveau. Mit dem Bezugszeichen 32 ist eine elektronische Steuereinheit (ECU) bezeichnet, die Bestandteil der Vorrichtung 1 bzw. des Federungssystems 4 ist. Mit dem Bezugszeichen 34 ist eine Signalleitung für den Beschleunigungssensor zum Erfassen der Beschleunigung in vertikaler Richtung bzw. in Richtung der z-Achse bezeichnet. Diese Signalleitung 34 verbindet den Beschleunigungssensor bzw. Beschleunigungsaufnehmer 22 mit der elektronischen Steuereinheit 32.

Mit dem Bezugszeichen 36 ist eine Steuerleitung für die Steuerung der Zu-/Abluft bezeichnet. Diese Steuerleitung 36 verbindet die elektronische Steuereinheit 32 mit dem Steuerventil für die Zu-/Abluft 26.

Mit dem Bezugszeichen 38 ist ein Stellglied für das Zusatzvolumen bzw. zur Veränderung des Zusatzvolumens bezeichnet. Dieses Stellglied 38 kann beispielsweise elektrisch und/oder hydraulisch ausgebildet sein.

Ferner ist bei der Gestaltung gemäß den Figuren 1 - 2c ein Lagesensor 40 zur Erfassung der Lage bzw. Stellung des Zusatzvolumens bzw. des Stellglieds zur Einstellung des Zusatzvolumens vorgesehen. Mit dem Bezugszeichen 42 ist eine Signalleitung "Lagesensor-Stellglied" bezeichnet. Die Signalleitung 42 verbindet den Lagesensor mit der elektronischen Steuereinheit 32. Mit dem Bezugszeichen 44 ist eine Steuerleitung "Stellglied-Zusatzvolumen" bezeichnet. Die Steuerleitung 44 verbindet das Stellglied 38 für die Einstellung des Zusatzvolumens mit der elektronischen Steuereinheit 32.

Mit dem Bezugszeichen 46 ist eine Druckleitung "Luftfeder-Zusatzvolumen" versehen. Die Druckleitung "Luftfeder-Zusatzvolumen" verbindet das Zusatzvolumen 30 fluidmäßig mit der Luftfeder 18.

Erfindungsgemäß ist vorgesehen, dass die Veränderung der Volumengröße des Zusatz-Volumens bzw. der Zusatz-Volumeneinrichtung 30 durch den Fahrer bzw. Nutzer angewählt wird. Hierzu kann beispielsweise ein mehrstufiger oder auch stufenloser Handregler bzw. ein Bedienelement angewählt werden und über die elektronische Steuereinheit an das Stellglied 38 als Signal übermittelt werden. Das Stellglied 38 ist hier beispielsweise ein elektrischer Kompaktzylinder. Der Sollwert der vorgewählten Volumengröße wird über den Lagesensor 40 überprüft und als 0-Wert für die Aktiv-Regelung neu registriert.

Die Aktiv-Regelung der Volumengröße kann ausgehend vom 0-Wert der voreingestellten Federrate aufgrund der vorliegenden Beschleunigung an der Basis bzw. am zweiten Teil 14 oder in Abhängigkeit der relativen Höhenposition über den Lagesensor 24 tätig werden. Je nach Art und Intensität der vorliegenden Schwingungen an der Basis bzw. am zweiten Teil 14 bzw. der relativen Sitzhöhe und unter Berücksichtigung der zur Verfügung stehenden Restfederwege kann vorgesehen sein, dass durch Vergrößern oder Verkleinern das Zusatzvolumens über das Stellglied 38 die Federrate in einem über die elektronische Steuereinheit 32 definierten Kennfeld permanent den entsprechenden Einleitungen angepasst wird. Diese zusätzlich eingebrachten Kräfte können sowohl entgegen der Einleitung als auch in Richtung der Einleitung wirken.

Die Niveauregelung der Sitzhöhe kann aufgrund einer Abweichung des Ist-Wertes am Lagesensor 40 zum Sollwert der relativen Sitzhöhe, welche aufgrund einer zuvor vorgenommenen Höheneinstellung in der elektronischen Steuereinheit 32 gespeichert ist, erfolgen. Hierbei kann über das Stellglied 38 das Verstellvolumen entsprechend vergrößert und/oder verkleinert werden.

Die aktive Niveausteuerung wird hierbei vorzugsweise nur temporär eingesetzt, um Änderungen der Masse 12 aufgrund von Gewichtsverlagerungen, wie z. B. Berg-/Talfahrten, Bremsmanövern, etc. zu kompensieren. Ebenso können über dieses System der Volumenveränderung evtl. vorliegende Leckageverluste vorzeitig ausgeglichen werden.

Länger anhaltende Niveaukorrekturen über das Verstellvolumen können nach einem gewissen Zeitraum bzw. nach Auswertung durch elektronische Steuereinheit 32 unter Zu- bzw. Abfuhr von Druckluft über das Steuerventil 26 ersetzt werden. Hierbei wird zeitgleich unter Auswertung über die elektronische Steuereinheit 32 das Verstellvolumen auf seinen 0-Wert, welcher über den Lagesensor 40 überprüft wird, zurückgefahren.

Die Figuren 2a, 2b und 2c zeigen die Gestaltung gemäß Figur 1 - in teilweiser Ansicht - in drei unterschiedlichen Stellungen bzw. mit drei unterschiedlichen Volumina der Zusatz-Volumeneinrichtung 30.

Bei der Gestaltung gemäß Figur 2a ist das Volumen der Zusatz-Volumeneinrichtung 30 am geringsten und bei der Stellung gemäß Figur 2c am größten. In Figur 2b ist eine Mittelstellung gezeigt. Die Gestaltung gemäß Figur 2a kann auch als Stellung "aktiv-up", die Stellung gemäß Figur 2b als "aktiv-middle" und die Stellung gemäß Figur 2c als "aktiv-down" bezeichnet werden.

Die mehrstufige oder stufenlose Verstellmöglichkeit der Federkennlinie ermöglicht es dem Fahrer die Grundhärte der Federung individuell zu verändern.

In Figur 2b ist eine mittlere Position des Bestellvolumens Zusatzvolumeneinrichtung 30 dargestellt. In den Darstellungen gemäß den Figuren 2a und 2c werden die Grenzpositionen der Maximalverstellung gebildet.

Die Bezugszeichen aus Figur 1 in den Figuren 2a bis 2c sind weitestgehend - aus Gründen der Übersichtlichkeit - weggelassen.

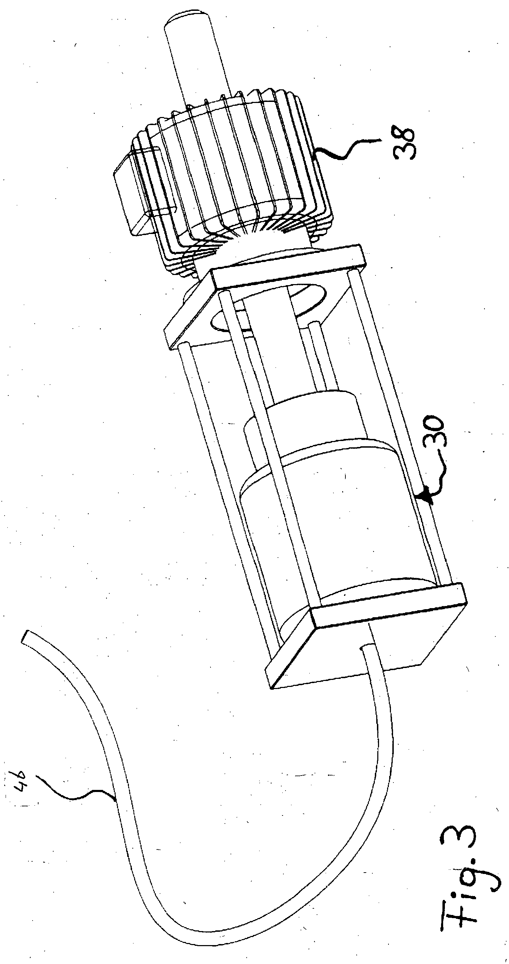

Figur 3 zeigt ein beispielhaftes Modell einer aktiven Volumenveränderung, Regelungseinrichtung in teilweiser schematischer Ansicht, wie sie beispielsweise bei den Gestaltungen gemäß den Figuren 1, bzw. 2a bis 2c gegeben sein kann.

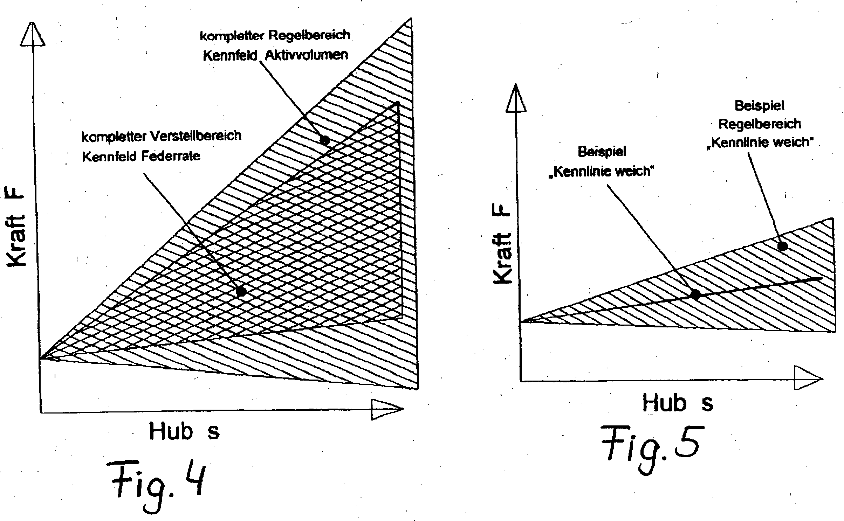

Die Figuren 4 und 5 zeigen zwei Diagramme, die beispielhafte Eigenschaften der Gestaltung gemäß den Figuren 1, 2a bis 2c, bzw. 3 charakterisieren können.

Dargestellt sind in den Figuren 4 und 5 der Kraft-Hub- bzw. Kraft-Weg-Verlauf, also der Verlauf der Kraft aufgetragen über den Hub bzw. Weg.

Durch das schraffierte Feld in Figur 4 wird der komplette Regelbereich des Kennfeldes "Aktiv-Volumen" dargestellt.

Durch den kreuzschraffierten, kleineren Bereich in Figur 4 wird der komplette Verstellbereich des Kennfelds "Federrate" dargestellt.

Der in Figur 5 deutlich schraffierte Bereich ist ein Beispiel für einen Regelbereich "Kennlinie weich". Die in diesem Bereich verlaufende durchgezogene Linie ist ein Beispiel für eine "Kennlinie weich".

Die Aktiv-Volumen-Regelung bleibt in allen Komfortpositionen vorhanden, kann aber in der Dynamik zur Veränderung der Intensität der Luftdämpfung angepasst werden.

Das Verfahren bzw. die Vorrichtung bietet ebenso die Möglichkeit einer automatischen Komfort-Maximierung. Hierbei bilden die über die elektronische Steuereinheit 32, die auch als elektronische Regeleinheit ausgebildet sein kann, bewerteten Wirkgrößen, wie Beschleunigung, Auslenkung der Federung und relative Sitzhöhe die Vorgabe an die vorgewählte Volumengröße, um ein Ideal an Schwingungsisolation bzw. Federungskomfort für den Fahrer zu erhalten.

Die Figuren 6 und 7 zeigen ein weiteres Ausführungsbeispiel einer erfindungsgemäßen Vorrichtung, mittels welcher auch ein erfindungsgemäßes Verfahren durchführbar ist.

Durch die Erfindung lassen sich durch ein variables Zusatzvolumen die Schwingungseigenschaften des Fahrzeugsitzes aktiv beeinflussen und verändern.

Weiter kann dieses aktive Stellglied zur Verringerung der Schwingungs-Exposition für den Fahrzeugführer eingesetzt werden.

Überdies kann es als aktives Stellglied zur Niveausteuerung und Beibehaltung der Sitzhöhe bei entsprechender Gestaltung der Vorrichtung beitragen.

### Bezugszeichenliste

- 1: Vorrichtung
- 2: Fahrzeug bzw. Fahrersitz
- 4: Federungssystem
- 10: Sitzfläche bzw. erstes Teil
- 12: Masse
- 14: zweites Teil
- 18: Luftfeder
- 20: Dämpfereinrichtung
- 22: Beschleunigungsaufnehmer
- 24: Lagesensor bzw. Positionserfassungssensor
- 26: Steuerventil Zu-/Abluft
- 28: druckförderndes System
- 30: Zusatz-Volumeneinrichtung
- 32: elektronische Steuereinheit (ECU)
- 34: Signalleitung
- 36: Steuerleitung Zu-/Abluft
- 38: Stellglied
- 40: Lagesensor
- 42: Signalleitung "Lagesensor-Stellglied"
- 44: Steuerleitung "Stellglied-Zusatzvolumen"
- 46: Druckleitung "Luftfeder-Zusatzvolumen"

## Patentansprüche

1. Vorrichtung mit einem Federungssystem, welches Federungssystem (4) ein mit einer Masse (12) beaufschlagtes erstes Teil (10), ein zweites Teil (14) sowie eine zwischen diesem ersten Teil (10) und diesem zweiten Teil (14) angeordneten Luftfeder (18) aufweist, wobei mindestens eine Zusatzvolumeneinrichtung (30) für Luft vorgesehen ist, deren Volumen gesteuert veränderbar ist, sowie eine erste Steuerungseinrichtung (32) für die Einstellung des Volumens der Zusatzvolumeneinrichtung (30),
**dadurch gekennzeichnet, dass**
das erste Teil ein Fahrzeugsitz und das zweite Teil ein Fahrzeugboden oder ein damit festverbundenes Teil ist, und dass
ein Lagesensor (40) zur Erfassung der Lage eines Stellgliedes zur Einstellung des Zusatzvolumens vorgesehen ist, wobei der Lagesensor (40) einen Sollwert einer durch einen Nutzer vorgewählten Volumengrösse überprüft, der als O-Wert für eine Aktivregelung neu registrierbar ist.

2. Vorrichtung nach Anspruch 1,
**dadurch gekennzeichnet, dass**
die Luftfeder (18) mit der Zusatzvolumeneinrichtung (30) über eine Fluidverbindung (46), insbesondere Schlauch oder Leitung, gekoppelt ist, so dass ein Flüidaustausch ermöglicht wird.

3. Vorrichtung nach einem der vorangehenden Ansprüche,
**dadurch gekennzeichnet, dass**
das die Zusatzvolumeneinrichtung (30) als Rollbalg gestaltet ist.

4. Vorrichtung nach einem der vorangehenden Ansprüche,
**dadurch gekennzeichnet, dass**
das die Zusatzvolumeneinrichtung (30) als Kolben-Zylinder-Einheit gestaltet ist.

5. Vorrichtung nach einem der vorangehenden Ansprüche,
**dadurch gekennzeichnet, dass**
das erste Teil (10) ein schwingendes Teil ist und dass das zweite Teil (14) ein feststehendes Teil ist.

6. Vorrichtung nach einem der vorangehenden Ansprüche,
**dadurch gekennzeichnet, dass**
das erste Teil (10) mit dem zweiten Teil (14) über eine Führungseinrichtung (16) gekoppelt ist.

7. Vorrichtung nach einem der vorangehenden Ansprüche,
**dadurch gekennzeichnet, dass**
das erste Teil (10) mit dem zweiten Teil (14) über ein Scherengestell (16) gekoppelt ist.

8. Vorrichtung nach einem der vorangehenden Ansprüche,
**dadurch gekennzeichnet, dass**
zwischen dem ersten Teil (10) mit dem zweiten Teil (14) ein Dämpfer (20) verschaltet ist.

9. Verfahren zur Einstellung eines Federungssystems einer Vorrichtung, welches Federungssystem (4) ein mit einer Masse (12) beaufschlagtes erstes Teil (10), ein zweites Teil (14) sowie eine zwischen diesem ersten Teil (10) und diesem zweiten Teil (14) angeordneten Luftfeder (18) mindestens eine, mit der Luftfeder (18) fluidmäßig gekoppelte, Zusatzvolumeneinrichtung (30), deren Volumen einstellbar ist und einen Lagesensor (40) zur Erfassung der Lage eines Stellgliedes zur Einstellung des Zusatzvolumens aufweist, zur Einstellung eines Federungssystems (4) einer Vorrichtung (1) gemäß einem der vorangehenden Ansprüche, wobei der Lagesensor (40) einen Sollwert einer durch einen Nutzer vorgewählten Volumengrösse überprüft, der als 0-Wert für eine Aktivregelung neu registrierbar ist,
mit den Schritten:
- Ermitteln, insbesondere Erfassen bzw. Messen, wenigstens eines Betriebskennwertes der Vorrichtung (1) und / oder des Federungssystems (4); und
- Einstellen des Volumens der Zusatzvolumeneinrichtung (30) in Abhängigkeit des wenigstens einen ermittelten Betriebskennwertes.

10. Verfahren nach Anspruch 9,
**dadurch gekennzeichnet, dass**
die - insbesondere vertikale - Beschleunigung des ersten Teils (10) relativ gegenüber dem zweiten Teil (14) ein erster Betriebskennwert ist, der ermittelt wird, und dass die - insbesondere vertikale - Relativposition des ersten Teils (10) relativ gegenüber dem zweiten Teil (14) ein zweiter Betriebskennwert ist, und dass das Volumens der Zusatzvolumeneinrichtung (30) in Abhängigkeit dieser ermittelten Beschleunigung und / oder in Abhängigkeit dieser ermittelten Relativposition eingestellt wird.

## Claims

1. Device comprising a suspension system, which suspension system (4) comprises a first part (10) which is acted upon by a mass (12), a second part (14), and an air spring (18) arranged between this first part (10) and this second part (14), at least one additional-volume device (30) for air being provided, the volume of which can be varied in a controlled manner, and a first control device (32) for adjusting the volume of the additional-volume device (30),
**characterised in that**
the first part is a vehicle seat and the second part is a vehicle floor or a part rigidly connected thereto, and **in that**
a position sensor (40) is provided for detecting the position of a control element for adjusting the additional volume, the position sensor (40) checking a target value of a volume size that is preselected by a user and can be reregistered as a 0-value for active control.

2. Device according to claim 1, **characterised in that** the air spring (18) is coupled to the additional-volume device (30) via a fluid connection (46), in particular a tube or a line, so that fluid exchange is made possible.

3. Device according to either of the preceding claims, **characterised in that** the additional-volume device (30) is configured as a bellows.

4. Device according to any of the preceding claims, **characterised in that** the additional-volume device (30) is in the form of a piston-cylinder unit.

5. Device according to any of the preceding claims, **characterised in that** the first part (10) is a vibrating part and the second part (14) is a stationary part.

6. Device according to any of the preceding claims, **characterised in that** the first part (10) is coupled to the second part (14) via a guide device (16).

7. Device according to any of the preceding claims, **characterised in that** the first part (10) is coupled to the second part (14) via a scissors-type frame (16).

8. Device according to any of the preceding claims, **characterised in that** a damper (20) is connected between the first part (10) and the second part (14).

9. Method for adjusting a suspension system of a device, which suspension system (4) comprises a first part (10) which is acted upon by a mass (12), a second part (14), and an air spring (18) arranged between this first part (10) and this second part (14), at least one additional-volume device (30) which is fluidically coupled to the air spring (18) and the volume of which can be adjusted, and a position sensor (40) for detecting the position of a control element for adjusting the additional volume, for adjusting a suspension system (4) of a device (1) according to any of the preceding claims, wherein the position sensor (40) checks a target value of a volume size which is preselected by a user and can be reregistered as a 0-value for active control, comprising the steps of:
- determining, in particular detecting and/or measuring respectively, at least one operating parameter of the device (1) and/or the suspension system (4); and
- adjusting the volume of the additional-volume device (30) on the basis of the at least one determined operating parameter.

10. Method according to claim 9, **characterised in that** the - in particular vertical - acceleration of the first part (10) relative to the second part (14) is a first operating parameter which is determined, and **in that** the - in particular vertical - relative position of the first part (10) relative to the second part (14) is a second operating parameter, and **in that** the volume of the additional-volume device (30) is adjusted on the basis of this determined acceleration and/or on the basis of this determined relative position.

## Revendications

1. Dispositif doté d'un système de ressort, ce système de ressort (4) comprenant une première partie (10) munie d'une masse (12), une deuxième partie (14) et un ressort pneumatique (18) disposé entre cette première partie (10) et cette deuxième partie (14), au moins un dispositif à volume supplémentaire (30) pour l'air étant prévu, dont le volume peut être modifié de manière contrôlée, et un premier dispositif de commande (32) pour le réglage du volume du dispositif à volume supplémentaire (30),
**caractérisé en ce que**
la première partie est un siège de véhicule et la deuxième partie est un plancher de véhicule ou une partie reliée fermement avec celui-ci et
**en ce qu'**un capteur de position (40) est prévu pour la détection de la position d'un organe de réglage pour le réglage du volume supplémentaire, le capteur de position (40) vérifiant une valeur de consigne d'un volume présélectionné par un utilisateur, qui peut être réenregistrée en tant que valeur 0 pour une régulation active.

2. Dispositif selon la revendication 1, **caractérisé en ce que** le ressort pneumatique (18) est couplé avec le dispositif à volume supplémentaire (30) par l'intermédiaire d'une liaison fluidique (46), plus particulièrement un flexible ou une conduite, de façon à permettre un échange de fluides.

3. Dispositif selon l'une des revendications précédentes, **caractérisé en ce que** le dispositif à volume supplémentaire (30) est conçu comme un soufflet roulant.

4. Dispositif selon l'une des revendications précédentes, **caractérisé en ce que** le dispositif à volume supplémentaire (30) est conçu comme une unité piston-cylindre.

5. Dispositif selon l'une des revendications précédentes, **caractérisé en ce que** la première partie (10) est une partie oscillante et **en ce que** la deuxième partie (14) est une partie fixe.

6. Dispositif selon l'une des revendications précédentes, **caractérisé en ce que** la première partie (10) est couplée avec la deuxième partie (14) par l'intermédiaire d'un dispositif de guidage (16).

7. Dispositif selon l'une des revendications précédentes, **caractérisé en ce que** la première partie (10) est couplée avec la deuxième partie (14) par l'intermédiaire d'un châssis en ciseaux (16).

8. Dispositif selon l'une des revendications précédentes, **caractérisé en ce qu'**entre la première partie (10) et la deuxième partie (14), est branché un amortisseur (20).

9. Procédé de réglage d'un système d'amortissement d'un dispositif, ce système d'amortissement (4) comprenant une première partie (10) munie d'une masse (12), une deuxième partie (14) et un ressort pneumatique (18) disposé entre cette première partie (10) et cette deuxième partie (14), au moins un dispositif à volume supplémentaire (30), relié de manière fluidique avec le ressort pneumatique (18), dont le volume est réglable, et un capteur de position (40) pour la détection de la position d'un organe de réglage pour le réglage du volume supplémentaire, pour le réglage d'un système d'amortissement (4) d'un dispositif (1) selon l'une des revendications précédentes, le capteur de position (40) contrôlant une valeur de consigne d'un volume présélectionné par un utilisateur, qui peut être réenregistré en tant que valeur 0 pour une régulation active, comprenant les étapes suivantes :
- détermination, plus particulièrement détection ou mesure respectivement, d'au moins une valeur caractéristique de fonctionnement du dispositif (1) et/ou du système d'amortissement (4) ; et
- réglage du volume du dispositif à volume supplémentaire (30) en fonction de l'au moins une valeur caractéristique de fonctionnement déterminée.

10. Procédé selon la revendication 9, **caractérisé en ce que** l'accélération, plus particulièrement verticale, de la première partie (10) par rapport à la deuxième partie (14) est une première valeur caractéristique de fonctionnement, qui est déterminée et **en ce que** la position relative, plus particulièrement verticale, de la première partie (10) par rapport à la deuxième partie (14) est une deuxième valeur caractéristique de fonctionnement et **en ce que** le volume du dispositif à volume supplémentaire (30) est réglé en fonction de cette accélération déterminée et/ou en fonction de cette position relative déterminée.
